(19) Europäisches Patentamt
European Patent Office
Office européen des brevets

(11) **EP 2 866 002 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
***G01D 5/347*** *(2006.01)*

(21) Anmeldenummer: **14185044.6**

(22) Anmeldetag: **17.09.2014**

(54) **Optische Positionsmesseinrichtung**

Optical positioning device

Dispositif optique de mesure de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2013 DE 102013220196**

(43) Veröffentlichungstag der Anmeldung:
**29.04.2015 Patentblatt 2015/18**

(73) Patentinhaber: **Dr. Johannes Heidenhain GmbH 83301 Traunreut (DE)**

(72) Erfinder:
• **Holzapfel, Wolfgang**
  **83119 Obing (DE)**
• **Drescher, Jörg**
  **83122 Samerberg (DE)**
• **Meissner, Markus**
  **83236 Übersee (DE)**

(56) Entgegenhaltungen:
**EP-A1- 2 520 906     GB-A- 475 323**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

## GEBIET DER TECHNIK

Die vorliegende Erfindung betrifft eine optische Positionsmesseinrichtung, die zur hochgenauen Bestimmung der Relativposition zweier zueinander beweglicher Objekte geeignet ist.

## STAND DER TECHNIK

In Wafers-Scannern der neuen Generation werden gitterbasierte, optische Positionsmesseinrichtungen eingesetzt, um die Position des bewegten Wafer-Tisches gegenüber einem festen sog. Metrology-Frame zu messen. Die Abtasteinheiten der entsprechenden Positionsmesseinrichtungen befinden sich dabei auf dem bewegten Wafer-Tisch bzw. Verfahrtisch und messen dessen Position in allen sechs räumlichen Freiheitsgraden. Solche Wafer-Scanner sind hochdynamische Maschinen, d.h. der bewegte Wafer-Tisch bewegt sich mit Verfahrgeschwindigkeiten v > 1 m/s und wird mit einem Vielfachen der Erdbeschleunigung beschleunigt. Die Anforderungen an die Messgenauigkeit der verwendeten optischen Positionsmesseinrichtungen liegen dabei im Bereich weniger Atomdurchmesser.

Um die geforderten Genauigkeiten zu realisieren verwendet man auf dem Wafer-Tisch interferentiell arbeitende Positionsmesseinrichtungen, wie sie z.B. aus der EP 1 762 828 A2 der Anmelderin bekannt sind. In derartigen Positionsmesseinrichtungen wird ein Abtaststrahlengang zwischen einer Maßverkörperung und einer Abtasteinheit ausgebildet, der zur Erzeugung verschiebungsabhängiger Signale dient. Hierzu wird Licht von einer Abtasteinheit zur Maßverkörperung ausgesandt, wo es in +/-1. Beugungsordnungen bzw. Beugungsarme aufgespalten wird. Die räumlich getrennten Beugungsordnungen werden in der Abtasteinheit in der Richtung umgekehrt, gelangen wieder zur Maßverkörperung, wo sie interferieren. Das resultierende Interferenz-Signal kann dann bzgl. der Position der zueinander beweglichen Objekte ausgewertet werden.

Die Positionsinformation ist in der Phasenlage der beiden Beugungsordnungen zueinander kodiert. Dies führt dazu, dass neben der Positionsphase vom Beugungsgitter der Maßverkörperung auch die Phasenverzögerung der beiden Beugungsarme zueinander in den gemessenen Positionswert eingeht. Diese Phasenverzögerung wird z.B. durch Brechungsindex-Schwankungen beeinflusst, welche durch Luftturbulenzen zwischen Maßverkörperung und Abtasteinheit entstehen, deren Ausdehnung kleiner als der Abstand der beiden Beugungsordnungen zueinander ist. Diese Turbulenzen wiederum werden hauptsächlich durch die Bewegung des Wafer-Tisches, auf dem sich üblicherweise mehrere Abtasteinheiten befinden, hervorgerufen. Dieses, durch Luftturbulenzen hervorgerufene Positionsrauschen ist ursächlich für den größten, nichtkorrigierbaren Fehleranteil von gitterbasierten Positionsmesseinrichtungen in hochdynamischen Maschinen. Von daher stellt sich in solchen Anwendungen das Problem, diesen Fehlerbeitrag zur Positionsmessung zu minimieren oder gar vollständig zu eliminieren.

In typischen, interferentiell arbeitenden, optischen Positionsmesseinrichtungen wird die Maßverkörperung mit einem kollimierten Strahlenbündel mit einem Durchmesser von 1 - 3mm beleuchtet. Typische Beugungswinkel der von der Maßverkörperung zurückgeworfenen Teilstrahlenbündel erster Beugungsordnung betragen dabei 15 - 30°. Die Trennung der beiden Beugungsordnungen, die zur Erzeugung der interessierenden Phaseninformation verwendet werden, nimmt also mit dem Abstand zur Maßverkörperung gemäß folgender Gesetzmäßigkeit zu:

$$d = 2 * \tan(\varphi) * h$$

mit:

    d: Abstand der beiden Teilstrahlenbündel
    $\varphi$: Beugungswinkel einer Beugungsordnung
    h: Abstand zur Maßverkörperung

Die Größe einzelner Bereiche mit gleichem Brechungsindex (Größe der Turbulenz) beträgt bei bewegter Luft mit einer Strömungsgeschwindigkeit von etwa 1 m/s typisch 2 - 5mm.

Brechungsindexschwankungen gehen dann signifikant in die gemessene Phase ein, wenn die räumliche Trennung der beiden später interferierenden Teilstrahlenbündel größer ist als die Größe der Turbulenz. Teilstrahlenbündel, die sich im Wesentlichen überdecken und deren räumliche Trennung deutlich kleiner ist als die Größe der Turbulenz, sehen die gleiche Brechungsindexschwankung, so dass kein Positionsmessfehler entsteht.

Für typische Systeme ist somit die gemessene Position nicht von Schwankungen des Brechungsindex abhängig, solange diese Schwankung auf Bereiche in der unmittelbaren Nähe der Maßverkörperung begrenzt ist:

$$d \ll r_T \text{, und damit } h \ll r_T / (2 \cdot \tan(\phi)) \text{, typisch } h \ll 1{,}7 \text{ mm}$$

Mit $r_\tau$ wird in diesen Beziehungen die Größe von Bereichen mit gleichem Brechungsindex angegeben.

In der Nähe der Maßverkörperung bis zu einem Abstand $d = 1{,}7$mm ist folglich die Trennung der beiden Teilstrahlenbündel kleiner als die typische Größe $r_\tau$ eines Bereiches mit homogenem Brechungsindex, so dass in diesem Bereich keine weiteren Maßnahmen zur Brechungsindexstabilisierung erforderlich sind. In Bereichen, welche weiter von der Maßverkörperung entfernt sind, sind die von der Maßverkörperung zurückgebeugten Teilstrahlenbündel so weit räumlich voneinander getrennt, dass diese unterschiedliche Luftturbulenzen sehen und diese Luftturbulenzen zu unterschiedlichen Schwankungen des Brechungsindex und damit zu Schwankungen in den gemessenen Positionsmesswerten führen können.

Zur Lösung des beschriebenen Problems ist es daher erforderlich, den Brechungsindex im Bereich zwischen der Abtasteinheit bis zu einem Abstand von etwa 1mm zur Maßverkörperung homogen zu halten. In unmittelbarer Nähe der Maßverkörperung ist eine Homogenisierung nicht unbedingt erforderlich.

Ein einfacher Weg, diesen unerwünschten Einfluss zu reduzieren besteht darin, den Abtastabstand zwischen Maßverkörperung und Abtasteinheit zu minimieren. So kann die Luft nur in einem kleinen Volumen stören und der akkumulierte Phasenfehler ist gering. Ziel wäre es hierbei, das freie Luftvolumen soweit einzugrenzen, dass alle Strahlenbündel im Abtaststrahlengang so eng beieinander liegen, dass die typische Größe eines Luftwirbels diese Ausdehnung übertrifft. Alle Strahlenbündel sehen somit ungefähr denselben Brechungsindex. Dem widerspricht aber häufig die Notwendigkeit eines großen Abtastabstandes in gewissen lokal begrenzten Bereichen der Maschine, z.B. um den erforderlichen Platz für einen Roboterarm beim Wafer-Tausch o.ä. zu schaffen und so Kollisionen zu vermeiden. Ebenfalls ist ein großer Abtastabstand in gewissen Betriebssituationen notwendig, wenn z.B. ein Verfahrtisch mit größeren anfänglichen Verkippungstoleranzen (da noch nicht auf die Positionsmesseinrichtungen geregelt) unter die Platten mit den Maßverkörperungen gefahren wird, z.B. beim Wechsel des Wafer-Tisches von einer Position in der Maschine auf eine andere, oder aber wenn der Tisch einen Not-Stopp durchführen muss. Alle diese Situationen erfolgen jedoch in einem Betriebsmodus der Maschine, der nicht die höchste Genauigkeit erfordert oder bei dem der Tisch mit deutlich geringeren Verfahrgeschwindigkeiten bewegt wird und somit die Luftverwirbelungen deutlich geringer sind.

Aus dem Stand der Technik ist zur Lösung dieser Problematik bekannt, die Luft im optischen Strahlweg durch sog. Luftduschen zu konditionieren. Dadurch wird versucht, einen möglichst homogenen und auch konstanten Brechungsindex im Abtaststrahlengang der Positionsmesseinrichtung zu generieren. Diese Konditionierung kann auf zwei Arten erfolgen.

Zum einen kann etwa die Luft im kompletten Verfahrbereich des Wafer-Tisches konditioniert werden, wie dies z.B. bei Interferometern erfolgt. Es kann bei gitterbasierten Positionsmesseinrichtungen aber auch nur lokal das Messvolumen zwischen Abtasteinheit und Maßverkörperung konditioniert werden. Ziel dieser Luftduschen ist es, langsame und große bzw. räumlich weit ausgedehnte Brechungsindexschwankungen zu reduzieren und zum anderen Luftturbulenzen zu vermeiden, die durch die Bewegung des Verfahrtisches möglichst laminaren Strömung und/oder Abschirmung der durch die Bewegung des Verfahrtisches zwischen Abtasteinheit und Maßverkörperung drängenden Luft durch die Luftströmung aus der Luftdusche erfolgen. Um diese Ziele zu erreichen, sind vergleichsweise große Strömungsgeschwindigkeiten der Luft erforderlich. Nachteilig bei einer solchen Lösung ist, dass die Luft nicht perfekt homogenisiert werden kann. Es kommt immer noch zu lokalen Turbulenzen durch die Bewegung des Wafer-Tisches und somit zu Brechungsindex-Schwankungen, die Positionsabweichungen erzeugen. Zudem entstehen durch die hohe Strömungsgeschwindigkeit aus der Luftdusche unabhängig von der Verfahrgeschwindigkeit des Wafer-Tisches Brechungsindexschwankungen, was in einem generell höheren Messrauschen resultiert.

Zum anderen sind Möglichkeiten bekannt, die Brechungsindexschwankungen zu reduzieren, indem spezielle Gase eingesetzt werden, deren Brechungsindex weniger vom Druck abhängt; denkbar ist auch der Betrieb im Vakuum. Beide Lösungen sind aber nur durch einen sehr großen technischen Aufwand möglich.

Die aktuellen Möglichkeiten der Konditionierung der Luft begrenzen somit die Positionsgenauigkeit der eingesetzten Positionsmesseinrichtungen und stellen den größten verbleibenden Anteil am Messfehler bei der Positionsbestimmung dar.

Aus der EP 2 520 906 A1 ist eine optische Positionsmesseinrichtung zur Erfassung der Position zweier relativbeweglicher Objekte bekannt, die einerseits eine Maßverkörperung und andererseits eine Abtasteinheit mit einer Lichtquelle, ein oder mehreren Gittern und einer Detektoranordnung umfasst. Auf Seiten der Abtasteinheit ist ein Gehäuse vorgesehen, in dem die verschiedenen Komponenten angeordnet sind und welches den Abtaststrahlengang zwischen Maßverkörperung und Abtasteinheit teilweise umgibt. Zur Lösung der oben diskutierten Probleme ist die aus dieser Druckschrift bekannte Vorrichtung nicht geeignet.

Die GB 475,323 A offenbart eine optische Messvorrichtung für Werkzeugmaschinen, bei der eine Maßverkörperung mittels eines Mikroskopes abgelesen wird. Der Raum zwischen der Maßverkörperung und dem Mikroskop-Objektiv wird von einem elastischen Tubus umgeben und ist dadurch hermetisch von der restlichen Umgebung abgeschirmt. Auch diese Vorrichtung ist nicht geeignet, die vorstehend erörterten Probleme zu beseitigen.

## ZUSAMMENFASSUNG DER ERFINDUNG

Der vorliegenden Erfindung liegt die Aufgabe zugrunde, eine optische Positionsmesseinrichtung zu schaffen, bei der der Fehlerbeitrag zur Positionsmessung beseitigt oder zumindest minimiert werden kann, der sich durch die bewegungsinduzierten Brechungsindex-Schwankungen im Abtaststrahlengang ergibt.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung umfasst eine Maßverkörperung sowie eine relativ hierzu entlang mindestens einer Messrichtung bewegliche Abtasteinheit, wobei ein Abtaststrahlengang zwischen Maßverkörperung und Abtasteinheit ausgebildet ist, der zur Erzeugung verschiebungsabhängiger Signale dient. Eine Schutzhaube ist derart beweglich entlang einer Achse senkrecht zur Maßverkörperungs-Ebene angeordnet, dass in mindestens einem Betriebsmodus die Schutzhaube den Abtaststrahlengang zwischen Abtasteinheit und Maßverkörperung weitgehend umgibt.

Mit Vorteil ist der Abstand zwischen der Schutzhaube und der Maßverkörperung

-   in einem ersten Betriebsmodus auf einen derartigen Abstandswert einstellbar, so dass die Schutzhaube den Abtaststrahlengang zwischen Abtasteinheit und Maßverkörperung zumindest in dem Raumbereich abschirmt, in dem dieser empfindlich gegenüber Brechungsindexschwankungen ist und
-   in mindestens einem zweiten Betriebsmodus auf einen größeren Abstandswert als im ersten Betriebsmodus einstellbar.

Dabei kann vorgesehen werden, dass in die Schutzhaube ein Luftlager integriert ist, über das im ersten Betriebsmodus ein konstanter Abstandswert zwischen der Schutzhaube und der Maßverkörperung einstellbar ist.

Es ist möglich, dass magnetische oder pneumatische Aktuatormittel vorhanden sind, um die Schutzhaube entlang der Achse definiert zu positionieren.

Hierbei kann der Abstand zwischen Schutzhaube und Maßverkörperung unabhängig von der Position eines Verfahrtisches konstant gehalten werden, an dem die Abtasteinheit angeordnet ist.

In einer vorteilhaften Ausführungsform kann vorgesehen werden, dass die Schutzhaube Rückstellmittel umfasst, die bei einem Ausfall der Energieversorgung automatisch einen maximal möglichen Abstand zwischen der Schutzhaube und der Maßverkörperung einstellen.

Hierbei können die Rückstellmittel als Federelemente ausgebildet sein, über die die Schutzhaube mechanisch vorspannbar ist.

Desweiteren ist es möglich, dass die Außenkontur der Schutzhaube derart gestaltet ist, dass durch die die Schutzhaube umströmende Luft keine Luftverwirbelungen entstehen.

Ferner kann vorgesehen sein, dass die Außenkontur der Schutzhaube derart gestaltet ist, dass durch die die Schutzhaube umströmende Luft keine Kräfte auf die Maßverkörperung resultieren.

Mit Vorteil kann an der Schutzhaube mindestens ein Strömungselement angeordnet sein, welches derart ausgebildet ist, dass sich der Stau- und Saugdruck an der Schutzhaube mit den dynamischen Drücken am Strömungselement bei einer bestimmten Geschwindigkeit des Verfahrtisches aufhebt, an dem die Abtasteinheit angeordnet ist.

Hierbei kann das Strömungselement als Luftleitblech ausgebildet sein, das seitlich an der Schutzhaube angeordnet ist.

Desweiteren ist es möglich, dass die Schutzhaube um eine auf die Maßverkörperungsebene senkrecht stehende Achse drehbar angeordnet ist.

Es ist desweiteren möglich, dass sich die Schutzhaube entlang der Achse senkrecht zur Maßverkörperungs-Ebene erstreckt und entlang dieser Achse eine Ausdehnung besitzt, die geringfügig kleiner als der Abstand zwischen der Maßverkörperung und der Abtasteinheit ist.

Mit Vorteil ist die Schutzhaube zylinderförmig ausgebildet, wobei sich die Zylinderachse entlang der Achse senkrecht auf die Maßverkörperungsebene erstreckt.

Ferner kann die Schutzhaube an der der Maßverkörperung zugewandten Seite eine Öffnung oder ein lichtdurchlässiges Abdeckelement aufweisen.

Als besonders vorteilhaft erweist sich bei der erfindungsgemäßen optischen Positionsmesseinrichtung, dass sich darüber Messfehler durch Brechungsindexschwankungen der Luft in Betriebsmodi mit geringem erforderlichem Abstand zwischen dem Verfahrtisch mit der Abtasteinheit und der Maßverkörperung in Applikationen minimieren lassen, bei denen in weiteren Betriebsmodi ein vergrößerter Abtastabstand erforderlich ist.

In möglichen Ausführungsformen der erfindungsgemäßen optischen Positionsmesseinrichtung lassen sich statische und wechselnde Kräfte auf die Maßverkörperung und/oder den Verfahrtisch reduzieren, die durch sich relativ zum Verfahrtisch bewegte Luft erzeugt werden; dies kann z.B. durch eine geeignet ausgebildete stromlinienförmige oder segelartige Kontur der erfindungsgemäß vorgesehenen Schutzhaube erreicht werden.

Desweiteren lässt sich durch die erfindungsgemäßen Maßnahmen der Einfluss von thermischen Schwankungen der Umgebungsluft auf die Positionsmesseinrichtung, z.B. Temperaturdrift, reduzieren.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1     eine stark schematisierte Darstellung eines ersten Ausführungsbeispiels der erfindungsgemäßen optischen Positionsmesseinrichtung;

Figur 2     eine stark schematisierte Darstellung einer ersten Variante des ersten Ausführungsbeispiels;

Figur 3     eine stark schematisierte Darstellung einer zweiten Variante des ersten Ausführungsbeispiels;

Figur 4     eine stark schematisierte Darstellung einer dritten Variante des ersten Ausführungsbeispiels;

Figur 5     eine stark schematisierte Darstellung einer vierten Variante des ersten Ausführungsbeispiels;

Figur 6     eine stark schematisierte Darstellung eines zweiten Ausführungsbeispiels der erfindungsgemäßen optischen Positionsmesseinrichtung;

Figur 7     eine stark schematisierte Darstellung einer Variante des zweiten Ausführungsbeispiels;

Figur 8     eine stark schematisierte Teil-Darstellung einer Variante eines dritten Ausführungsbeispiels der erfindungsgemäßen optischen Positionsmesseinrichtung;

Figur 9     eine stark schematisierte Teil-Darstellung einer weiteren Variante der erfindungsgemäßen optischen Positionsmesseinrichtung.

## BESCHREIBUNG DER AUSFÜHRUNGSFORMEN

Die grundlegende Überlegung der erfindungsgemäßen optischen Positionsmesseinrichtung besteht darin, das komplette Strahlvolumen der Positionsmesseinrichtung über eine Schutzhaube in mindestens einem Betriebsmodus weitgehend zu kapseln und somit von der Umgebungsluft abzuschirmen. Der Abtaststrahlengang zwischen Maßverkörperung und Abtasteinheit ist demzufolge zumindest in dem Raumbereich abgeschirmt und von der Schutzhaube umgeben, in dem dieser empfindlich gegenüber Brechungsindexschwankungen ist. Die Kapselung erfolgt vorzugsweise bis dicht vor die Oberfläche der Maßverkörperung, so dass dort nur ein kleiner Spalt verbleibt, in dem eventuelle Brechungsindexschwankungen keine signifikanten Positionsfehler generieren. Innerhalb des durch die Schutzhaube gekapselten und abgeschirmten Bereiches des Abtaststrahlengangs zwischen Maßverkörperung und Abtasteinheit existieren in diesem Betriebsmodus keine Luftwirbel; der Brechungsindex in den Strahlvolumina ist nahezu konstant und generiert somit kein hochfrequentes Positionsrauschen.

In denjenigen Bereichen und Betriebssituationen, in denen ein großer Abtastabstand in der erfindungsgemäßen optischen Positionsmesseinrichtung benötigt wird, kann die Schutzhaube abgesenkt und die Positionsmesseinrichtung in den entsprechenden anderen Betriebsmodi ohne eingeschwenkte Schutzhaube zwischen Maßverkörperung und Abtasteinheit betrieben werden.

Falls aufgrund der hohen Dynamik der Maschine oder durch plötzlich eintretende Betriebszustände, z.B. im Falle einer Notbremsung, der große Abtastabstand sehr schnell hergestellt werden muss, kann eine schnelle Absenkung der Schutzhaube durch geeignete Rückstellmittel vorgesehen werden, z.B. über eine mechanische Vorspannung im Lager der Schutzhaube. Darüber wird automatisch ein maximal möglicher Abstand zwischen der Schutzhaube und der Maßverkörperung eingestellt, so dass etwa bei einem Ausfall der Energieversorgung die Schutzhaube automatisch von der Maßverkörperung weg bewegt wird.

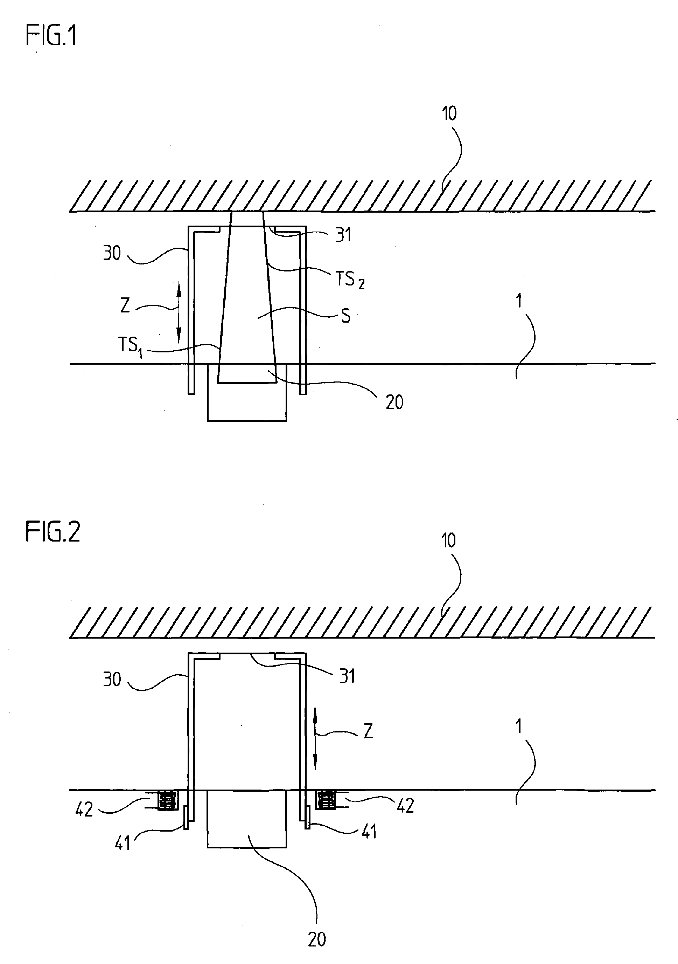

Ein erstes Ausführungsbeispiel der erfindungsgemäßen optischen Positionsmesseinrichtung ist in Figur 1 stark schematisiert gezeigt. Diese umfasst eine Maßverkörperung 10 sowie eine Abtasteinheit 20, die an relativ zueinander entlang mindestens einer Messrichtung beweglichen Maschinenteilen angeordnet sind. Über die Abtasteinheit 20 wird die Maßverkörperung 10 optisch abgetastet und auf diese Art und Weise verschiebungsabhängige Signale für eine - nicht gezeigte - Maschinensteuerung erzeugt. Von der optischen Abtastung bzw. den genutzten Abtaststrahlengängen sind in Figur 1 lediglich zwei seitlich begrenzende Teilstrahlenbündel $TS_1$, $TS_2$ angedeutet; in Bezug auf eine geeignete Abtastung sei z.B. auf die eingangs erwähnte EP 1 762 828 A2 der Anmelderin verwiesen. In der Abtasteinheit 20 können hierbei etwa eine Lichtquelle, verschiedene Optikelemente wie Linsen, Gitter etc. sowie eine Detektoranordnung zur Ausbildung eines Abtaststrahlengangs zur Erzeugung der verschiebungsabhängigen Signale vorgesehen sein; alternativ ist auch eine Anbindung von Lichtquelle und/oder Detektoranordnung an die Abtasteinheit mittels Lichtleitern möglich. Grundsätzlich ist die vorliegende Erfindung nicht auf eine bestimmte optische Abtastung eingeschränkt.

Im vorliegenden Ausführungsbeispiel wird die erfindungsgemäße optische Positionsmesseinrichtung in einer Maschine zur Halbleiterfertigung, z.B. in einem Wafer-Scanner, eingesetzt. Die Abtasteinheit 20 ist hierbei an einem Verfahrtisch bzw. Wafer-Tisch 1 angeordnet, der gegenüber der Maßverkörperung 10 an einem stationären Maschinenteil entlang mindestens einer Messrichtung beweglich ist. Die Messrichtung der Positionsmesseinrichtung verläuft im gezeigten Beispiel horizontal in der Zeichenebene.

Die erfindungsgemäße optische Positionsmesseinrichtung umfasst wie bereits oben angedeutet eine Schutzhaube 30, die entlang einer Achse senkrecht zur Maßverkörperungs-Ebene beweglich angeordnet ist. In den Figuren wird diese Achse mit dem Bezugszeichen z bezeichnet. In einem ersten Betriebsmodus umgibt die Schutzhaube 30 wie veranschaulicht den Abtaststrahlengang zwischen Maßverkörperung 10 und Abtasteinheit 20 bzw. das Strahlvolumen S in diesem Bereich und schirmt diesen somit gegen eventuelle Schwankungen im Brechungsindex der Luft ab. An der der Maßverkörperung 10 zugewandten Seite weist die Schutzhaube 30 im vorliegenden ersten Ausführungsbeispiel ein Abdeckelement 31 auf, ausgebildet als transparentes Deckglas, das die Schutzhaube 30 an dieser Seite abschließt.

Für die Schutzhaube 30 sind vorzugsweise mindestens zwei mögliche Positionen entlang der Achse z vorgesehen, die diese in unterschiedlichen Betriebsmodi einnehmen kann.

In einer ersten Position bzw. in einem ersten Betriebsmodus ist die Schutzhaube 30 wie in der Figur gezeigt maximal nach oben in Richtung der Maßverkörperung 10 hin ausgefahren bzw. eingeschwenkt, um den Abtaststrahlengang bzw. das Strahlvolumen S zwischen Abtasteinheit 20 und Maßverkörperung 10 weitgehend abzuschirmen und das oben erwähnte Rauschen, verursacht durch Brechungsindexschwankungen, zu minimieren. Im ersten Betriebsmodus wird somit ein möglichst minimaler Wert des Abstands zwischen der Oberkante der Schutzhaube 30 und der Maßverkörperung 10 entlang der Achse z eingestellt.

In einer zweiten Position bzw. in mindestens einem zweiten Betriebsmodus ist die Schutzhaube 30 hingegen vollständig nach unten in Richtung der Abtasteinheit 20 eingefahren bzw. ausgeschwenkt, um das Strahlvolumen S oberhalb der Abtasteinheit 20 frei zu geben. In diesem Betriebsmodus ist ein somit ein größerer Abstand zwischen der Maßverkörperung 10 und der Oberkante der Schutzhaube 30 vorgesehen als im ersten Betriebsmodus.

Das Einstellen des erforderlichen Abstands zwischen Schutzhaube 30 und Maßverkörperung 10 für die jeweiligen Betriebsmodi kann im vorliegenden Ausführungsbeispiel der erfindungsgemäßen Positionsmesseinrichtung über eine - nicht in den Figuren dargestellte - Steuereinheit erfolgen.

Mindestens zum Einschwenken der Schutzhaube 30 im ersten Betriebsmodus umfasst die erfindungsgemäße optische Positionsmesseinrichtung geeignete Aktuatormittel, die in unterschiedlichster Art und Weise ausgebildet sein können, wie in den nachfolgenden Varianten veranschaulicht sei.

In Figur 2 ist eine erste Variante des ersten Ausführungsbeispiels der erfindungsgemäßen optischen Positionsmesseinrichtung schematisiert gezeigt, in der eine magnetische Halterung der Schutzhaube 30 bzw. magnetische Aktuatormittel vorgesehen werden, um die Schutzhaube entlang der Achse z zu positionieren. Über Elektromagnete 42, angeordnet am Wafer-Tisch 1, die mit angedeuteten Magnet-Elementen 41, z.B. ausgebildet als Ferromagnete oder Paramagnete, an der Schutzhaube 30 wechselwirken, kann die Schutzhaube 30 im erwähnten ersten Betriebsmodus nach oben verfahren und in den Abtaststrahlengang eingeschwenkt gehalten werden. Derart kann der Abtaststrahlengang in diesem Betriebsmodus gegen Brechungsindexschwankungen in der umgebenden Luft abgeschirmt werden.

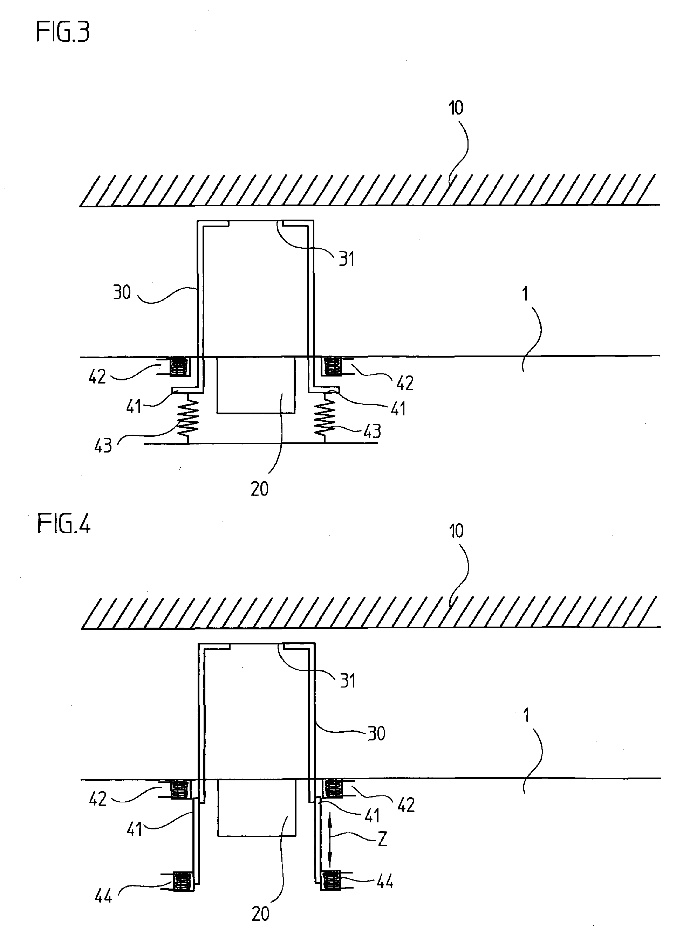

Optional kann desweiteren die Erzeugung einer mechanischen Vorspannung entlang der z-Richtung für die Schutzhaube 30 vorgesehen werden, um die Schutzhaube 30 z.B. bei einem Not-Halt oder einem Ausfall der Energieversorgung schnell von der Maßverkörperung 10 weg zu bewegen, damit diese nicht die Maßverkörperung 10 beschädigt. Eine entsprechende zweite Variante des ersten Ausführungsbeispiels der erfindungsgemäßen optischen Positionsmesseinrichtung ist in Figur 3 dargestellt. Mit den Bezugszeichen 43 werden dort Federelemente bezeichnet, die zwischen der Schutzhaube 30 und dem in z-Richtung ortsfesten Wafer-Tisch 1 angeordnet sind und hier als Rückstellmittel fungieren, über die die Schutzhaube 30 mechanisch vorspannbar ist. Diese Variante bietet den Vorteil, dass im Falle eines Ausfalls der Energieversorgung oder bei einem Not-Halt die Schutzhaube 30 automatisch und schnell von der Maßverkörperung 10 weg bewegt wird und so automatisch einen maximal möglichen Abstand zwischen der Schutzhaube 30 und der Maßverkörperung 10 einstellen.

In einer weiteren Variante der ersten Ausführungsform der erfindungsgemäßen optischen Positionsmesseinrichtung, gezeigt in Figur 4, können zusätzliche Elektromagnete 44 im Wafer-Tisch 1 als weitere magnetische Aktuatormittel vorgesehen werden, um die Schutzhaube 40 schnell abzusenken bzw. aus dem Abtaststrahlengang zu entfernen. Die neben den Elektromagneten 42 zum Einschwenken der Schutzhaube 30 zusätzlich vorgesehenen Elektromagnete 44 sind in dieser Variante in z-Richtung, also entlang der Bewegungsrichtung, der Schutzhaube 30 beabstandet zu den Elektromagneten 42 angeordnet; auf Seiten der Schutzhaube 30 sind geeignet ausgebildete Magnet-Elemente 41 angeordnet, die mit den verschiedenen Elektromagneten 42, 44 wechselwirken.

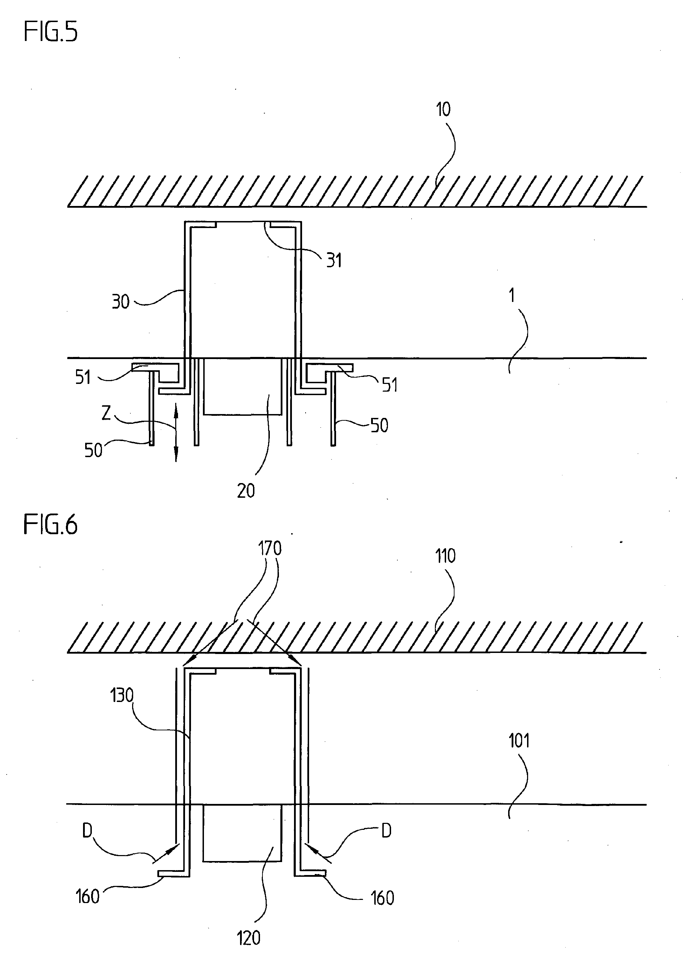

Eine weitere Variante des ersten Ausführungsbeispiels der erfindungsgemäßen optischen Positionsmesseinrichtung ist in Figur 5 dargestellt. Über die hier eingesetzten pneumatischen Aktuatormittel ist eine Vakuum-Ansaugung der Schutzhaube 30 in Richtung Maßverkörperung 10 im ersten Betriebsmodus und ein Absenken der Schutzhaube 30 über einen Luftüberdruck in einem zweiten Betriebsmodus vorgesehen. Die Schutzhaube 30 wird dabei an einen oder mehrere Pneumatik-Zylinder 50 angeschlossen, die mit geeigneten Druckluft- bzw. Vakuumleitungen 51 in Verbindung stehen.

Ein zweites Ausführungsbeispiel der erfindungsgemäßen optischen Positionsmesseinrichtung wird nachfolgend anhand von Figur 6 erläutert.

Da der Verfahrtisch bzw. Wafer-Tisch 101 üblicherweise auch vertikal bewegt wird, d.h. entlang der z-Richtung auf die Maßverkörperung 110 zu oder weg, kann bei einer Schutzhaube 130 mit nur zwei vorgesehenen Positionen der Abstand zwischen Schutzhaube 130 und Maßverkörperung 110 nur so gering gewählt werden, dass diese auch in extremen Stellungen (z.B. bei Verkippungen des Wafer-Tisches 101) die Maßverkörperung 110 nicht berührt. Damit ist der Abstand in der normalen Lage des Wafer-Tisches 101 jedoch nicht optimal und der verbleibende Luftspalt ist je nach Pose des Wafer-Tisches 101 unterschiedlich. Dies führt im Betrieb zu veränderlichen Einflüssen der Luft auf die gemessene Position. Als besonders vorteilhaft erweist sich daher, den Abstand zwischen der Oberkante der Schutzhaube 130 und der Maßverkörperung 110 im ersten Betriebsmodus auf einen minimalen und konstanten Abstandswert einzustellen. Auf diese Art und Weise bleibt der auf den Abtaststrahlengang ausgeübte Störungseinfluss immer gleich und insbesondere in allen Bewegungszuständen des Wafer-Tisches 101 minimal. Zur derartigen Einstellung eines konstanten Abstandswerts ist in diesem Ausführungsbeispiel der erfindungsgemäßen Positionsmesseinrichtung ein Luftlager 170 in die Schutzhaube 130 integriert, und zwar im Grenzbereich zwischen Maßverkörperung 110 und Schutzhaube 130. Der Abstand zwischen der Oberkante der Schutzhaube 130 und der Maßverkörperung 110 ist in einer derartigen Ausführungsform automatisch durch die Dimensionierung des Luftlagers 170 gegeben und nur gering vom Anpressdruck der Schutzhaube 130 nach oben abhängig.

Arbeitet das Luftlager 170 im jeweiligen Anwendungsfall in Richtung der Schwerkraft, d.h. der Druck des Luftlagers 170 weist die gleiche Richtung auf wie die Schwerkraft, so muss das Luftlager 170 noch zusätzlich mechanisch vorgespannt werden. Hierzu sind in Figur 6 schematisiert angedeutete mechanische Vorspannelemente 160 an der Schutzhaube 130 angedeutet. Über das Luftlager 170 selbst wird dann ein konstanter Abstandswert zwischen Schutzhaube 130 und der Maßverkörperung 110 eingestellt; z.B. also zwischen der Oberkante der Schutzhaube 130 und der Maßverkörperung 110.

Aufgrund des vorgesehenen Luftlagers 170 folgt die Schutzhaube 130 in diesem Ausführungsbeispiel der erfindungsgemäßen Positionsmesseinrichtung automatisch den Bewegungen des Wafer-Tisches 101 bzw. der Maßverkörperung 110, also z.B. entsprechenden Kippbewegungen und/oder einem Versatz entlang der z-Richtung. Über die Luftlagerung der Schutzhaube 130 kann dabei nicht nur der Abstand zwischen Schutzhaube 130 und Maßverkörperung 110 konstant gehalten werden sondern bei einer eventuellen Verkippung des Wafer-Tisches 101 auch der Winkel zwischen Schutzhaube 130 und Maßverkörperung 110. Dies erfolgt. Indem die Schutzhaube 130 nicht nur entlang der Achse bzw. Richtung Z beweglich angeordnet wird, sondern auch in geringem Maße um die beiden hierzu senkrecht orientierten Achsen X und Y drehbar angeordnet ist. Bei einer Verkippung des Wafer-Tisches 101 wird sich die Schutzhaube 130 aufgrund der Vorspannung automatisch so drehen, dass das Luftlager 170 entlang der Schutzhaube 130 einen konstanten Abstand zur Maßverkörperung 110 aufweist.

Der Anpressdruck der Schutzhaube 130 auf die Maßverkörperung 110 über das Luftlager 170 kann dabei durch eine geeignete Vorspannung, z.B. über Vorspannmittel wie Magnete oder Federn, konstant gehalten werden. Mit diesen Vorspannmitteln wechselwirken dann die Figur 6 schematisiert angedeuteten Vorspannelemente 160 an der Schutzhaube 130. Auf diese Art und Weise kann im Übrigen auch die auf die Maßverkörperung 110 wirkende Kraft konstant gehalten. Andernfalls könnte der resultierende Druck der Schutzhaube 130 in Z-Richtung auf die Maßverkörperung 110 zu einer Verformung derselben und entsprechenden Messfehlern führen. Wird die Vorspannung durch aktive Vorspannmittel wie z.B. über einen Elektromagneten erzeugt, so können diese -mittel gleichzeitig für die schnelle Absenkung der Schutzhaube 130 im zweiten Betriebsmodus als Aktuatormittel verwendet werden. Mit Hilfe einer derartigen Vorspannung ist auch ein Anheben der Schutzhaube 130 in Richtung der Maßverkörperung 110 im ersten Betriebsmodus in denjenigen Fällen möglich, in denen die Maßverkörperung 110 oberhalb der Abtasteinheit 120 angebracht ist.

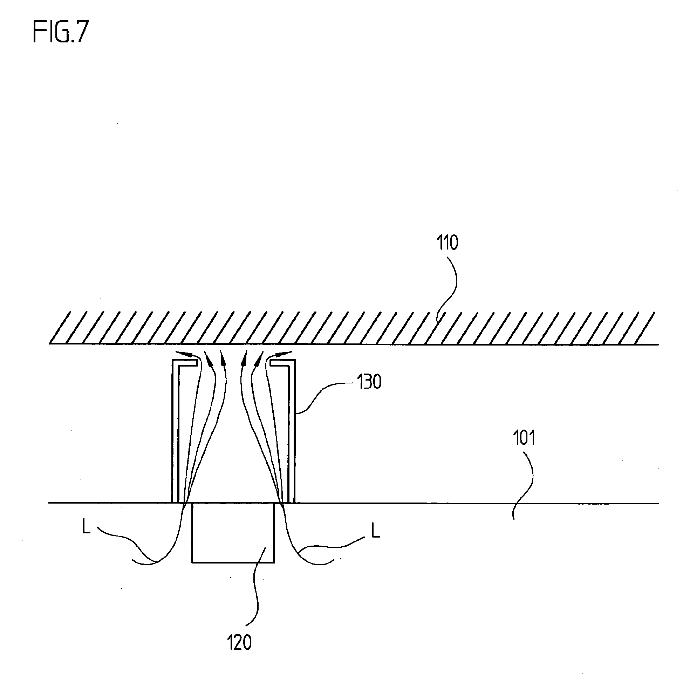

Alternativ kann in einer Variante der zweiten Ausführungsform der erfindungsgemäßen optischen Positionsmesseinrichtung die Schutzhaube 130 im ersten Betriebsmodus mittels pneumatischer Aktuatormittel auch durch einen Luftüberdruck angehoben werden, wie dies in Figur 7 veranschaulicht ist. Durch eine geeignete Ausgestaltung kann dabei die zum Anheben und Vorspannen verwendete Luft L gleichzeitig in einem Luftlager verwendet werden. Die Struktur in der Schutzhaube 130 wird dabei so ausgestaltet, dass ein stationärer Zustand erreicht wird. Die Brechungsindex-Variationen sind dadurch minimiert und der Messfehler bzw. das Positionsrauschen reduziert. Durch diese Form der Lagerung werden zudem äußere Einflusse durch lokale Wärmequellen vermieden.

Abschließend wird ein drittes Ausführungsbeispiel der erfindungsgemäßen optischen Positionsmesseinrichtung erläutert.

In gewissen Anwendungen ist es wichtig, dass vom Wafer-Tisch keine Kraft auf die Maßverkörperung eingeleitet wird, z.B. durch resultierenden Stauund Saugdruck bei der Bewegung des Wafer-Tisches. Eine zusätzliche Schutzhaube, welche nur in einem minimalen Abstand von der Maßverkörperung entfernt bewegt wird, kann sich in diesem Fall möglicherweise negativ auswirken. Vorteilhaft ist es daher, wenn die über die Schutzhaube auf die Maßverkörperung ausgeübte Kraft möglichst minimiert wird, welche durch die Verdrängung der Luft durch die Schutzhaube entsteht.

Die kann zum einen durch eine stromlinienförmige Ausgestaltung der Schutzhaube geschehen, durch die der Stau- und Saugdruck durch die Bewegung des Wafer-Tisches minimiert wird. Durch diese stromlinienförmige Gestaltung können desweiteren Verwirbelungen vermieden werden, die sich in Bewegungsrichtung hinter der Schutzhaube ausbilden können und durch die damit verbundenen wechselhaften Drücke eine wechselnde Kraft auf der Wafer-Tisch und die Maßverkörperung ausüben.

Zum anderen kann durch ein geeignet ausgebildetes Strömungselement in Form einer Struktur, die seitlich an der Schutzhaube angebracht ist, Luft bei einer Bewegung des Wafer-Tisches so zu der Maßverkörperung und von dieser weg geleitet werden, dass in Summe die durch die bewegte Luft auf die Maßverkörperung ausgeübte Kraft kompensiert ist.

Die erwähnte Struktur und/oder stromlinienförmige Ausgestaltung der Schutzhaube können dabei so angebracht und optimiert werden, dass die durch Luftverdrängung des Wafer-Tisches erzeugt Kraft in der Hauptbewegungsrichtung des Wafer-Tisches, in der die größte Genauigkeit gefordert ist, minimiert ist. Alternativ kann die Schutzhaube auch drehbar angeordnet sein und in ihrer Orientierung der Bewegungsrichtung des Wafer-Tisches angepasst werden.

Dies kann entweder durch eine geeignete Gestaltung der Außenkontur der Schutzhaube erfolgen oder aber mittels entsprechend ausgebildeter Strömungselemente, wie z.B. eine geeignet ausgebildete Struktur, die seitlich an der Schutzhaube angebracht ist. Vorzugsweise ist das Strömungselement bzw. die Struktur dabei so ausgebildet, dass sich der Stau- und Saugdruck an der Schutzhaube mit den dynamischen Drücken am Strömungselement bei einer bestimmten Geschwindigkeit des Wafer-Tisches durch Verdrängung der Luft aufhebt. Das Strömungselement wird dabei vorteilhafterweise so angebracht, dass dieses vom "Fahrtwind" bei der Bewegung des Wafer-Tisches umströmt wird.

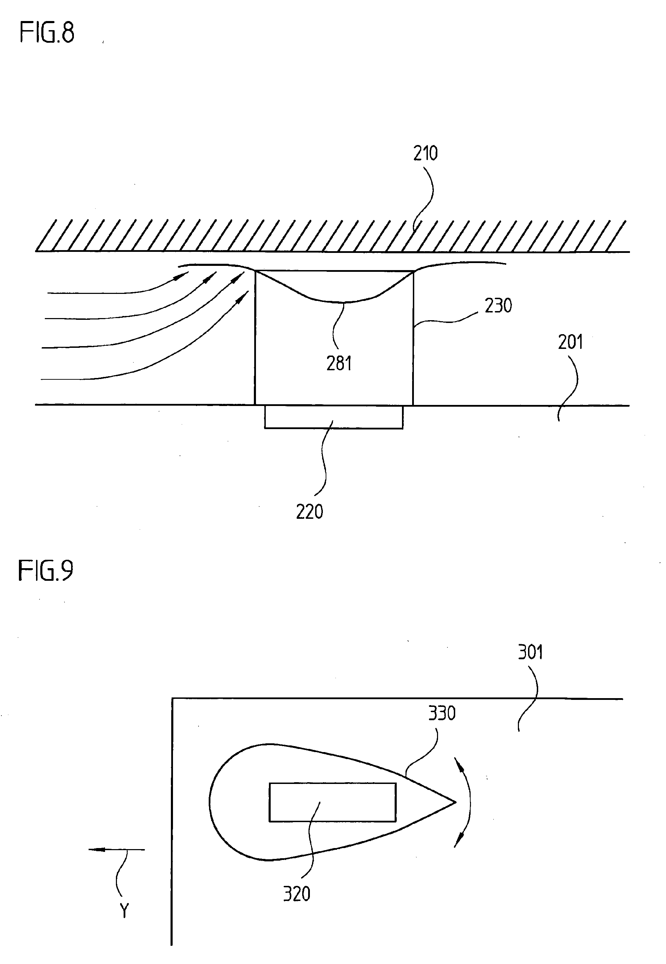

Das Wirkungsprinzip eines als Luftleitblechs ausgebildeten Strömungselements in der dritten Ausführungsform der erfindungsgemäßen optischen Positionsmesseinrichtung ist in Figur 8 veranschaulicht. Das Luftleitblech 281 wird verwendet, um die Luft, welche auf die Maßverkörperung 210 drückt, abzufangen und diese Kraft auf den Wafer-Tisch 201 einzuleiten. Die auf die Maßverkörperung 210 wirkende Kraft wird auf diese Art und Weise reduziert.

In Applikationen, in denen eine hochgenaue Positionierung des Wafers erforderlich ist, ist der Wafer-Tisch häufig zweiteilig aufgebaut. Ein erster Verfahrtisch übernimmt die großen Verfahrbewegungen zu einer Grobpositionierung. Auf diesem ersten Verfahrtisch ist ein zweiter Verfahrtisch angeordnet, welcher die Feinpositionierung der Wafers übernimmt. Der zweite Verfahrtisch kann dabei nur in geringem Maße gegenüber dem ersten Verfahrtisch bewegt werden und korrigiert dadurch die Regelabweichungen des ersten, groben Verfahrtisches. Im Falle eines zweiteiligen Verfahrtisches kann nun die Schutzhaube vorteilhaft auf dem ersten Verfahrtisch angebracht werden. Dadurch werden die Kräfte, die durch die Bewegung der Schutzhaube sowie die die Schutzhaube umströmende Luft entstehen, auf den ersten Verfahrtisch abgeleitet und beeinflussen den zweiten, für die genaue Positionierung zuständigen Verfahrtisch nicht.

Neben den konkret beschriebenen Ausführungsbeispielen existieren im Rahmen der vorliegenden Erfindung selbstverständlich noch weitere Ausgestaltungsmöglichkeiten. Bevor einzelne derartiger Möglichkeiten erläutert werden, sei ausdrücklich darauf hingewiesen, dass es natürlich möglich ist, die anhand der verschiedenen Ausführungsbeispiele und Varianten erläuterten Maßnahmen in der erfindungsgemäßen Positionsmesseinrichtung je nach Anforderung geeignet miteinander zu kombinieren.

Desweiteren kann vorgesehen werden, dass die Schutzhaube zur Maßverkörperung anstelle des in den Beispielen jeweils vorgesehenen transparenten Abdeckelements eine Öffnung oder aber eine Blende aufweist. Ein mittels eines Abdeckelements abgeschlossenes Strahlvolumen erweist sich dabei für einen möglichst stationären Zustand der Luft im Innenraum der Schutzhaube als günstiger und stellt im Falle von nur zwei erforderlichen Positionen der Schutzhaube die bevorzugte Variante dar.

Gemäß der Draufsicht in Figur 9 kann die Außenkontur der Schutzhaube 330 ferner so gestaltet sein, dass sie entlang der Hauptbewegungsrichtung Y des Wafer-Tisches 301 stromlinienförmig ausgebildet ist. Dadurch wirkt auf den Wafer-Tisch 301 eine minimale Kraft bzw. ein minimales, Kippungen verursachendes Drehmoment. Auch führt die stromlinienförmige Gestalt bzw. Kontur der Schutzhaube 330 zu geringeren Verwirbelungen, d.h. die Störkräfte auf die Schutzhaube 330 und somit auf den Wafer-Tisch 301 werden auf diese Art und Weise deutlich verringert. Idealerweise wird durch die Form der Schutzhaube 330 eine laminare Strömung entlang der Schutzhaube 330 ermöglicht. Die Optimierung der Form bzw. Kontur der Schutzhaube 330 erfolgt vorzugsweise nur für eine Hauptbewegungsrichtung des Wafer-Tisches 301.

Sollten ggf. beide Hauptbewegungsrichtungen des Wafer-Tisches 301 hohe Messgenauigkeiten erfordern, so kann die Schutzhaube 330 auch drehbar um ihre Längsachse bzw. um eine senkrecht auf die Maßverkörperungsebene stehende Achse gelagert werden. Durch ihre Form folgt sie dann automatisch der jeweiligen Bewegungsrichtung und minimiert für alle Bewegungs- bzw. Verfahrrichtungen die durch Wirbel induzierten Störkräfte auf den Wafer-Tisch 301.

Allgemein kann die Schutzhaube von Vorteil sein, wenn der Wafer-Tisch bzw. der optische Abtaststrahlengang wechselnden thermischen Belastungen ausgesetzt ist. Durch die über die Schutzhaube resultierende Abschirmung wird nicht nur die Bewegungsluft aus dem Strahlvolumen heraus gehalten, auch thermische Strahlung kann, z.B. durch Einfügen einer Isolierung, abgeschirmt werden. Die Luft im Inneren der Schutzhaube verbleibt so in einem konstanten stationären Zustand, das Positionsrauschen und die Positionsdrift in den gemessenen Signalen werden deutlich verringert.

Um unnötige Wartezeiten beim Absenken der Schutzhaube, z.B. zum Be- und/oder Entladen eines Wafers zu vermeiden, kann die Schutzhaube bereits auf der Fahrt zu der Beladestation abgesenkt werden.

In Fällen, in denen der Verfahrtisch bzw. Wafer-Tisch wie oben erläutert zweiteilig ausgebildet ist und aus einem ersten Verfahrtisch und einem zweiten Verfahrtisch besteht, kann die Schutzhaube vorteilhafterweise am ungenaueren ersten Verfahrtisch angebracht werden. Die Krafteinwirkung durch die Luft auf die Schutzhaube wirkt so nicht direkt auf den genauen zweiten Verfahrtisch. Desweiteren werden Kräfte, die ohne Schutzhaube durch die Luft auf die Abtasteinheit wirken würden, durch die Schutzhaube abgeschirmt.

**Patentansprüche**

1. Optische Positionsmesseinrichtung mit einer Maßverkörperung (10; 110; 210) sowie einer relativ hierzu entlang mindestens einer Messrichtung beweglichen Abtasteinheit (20; 120; 220; 320), wobei ein Abtaststrahlengang zwischen Maßverkörperung (10; 110; 210) und Abtasteinheit (20; 120; 220; 320) ausgebildet ist, der zur Erzeugung verschiebungsabhängiger Signale dient,

   **dadurch gekennzeichnet,**

   - **dass** eine Schutzhaube (30; 130; 230; 330) derart beweglich entlang einer Achse senkrecht zur Maßverkörperungs-Ebene angeordnet ist, dass in mindestens einem Betriebsmodus die Schutzhaube (30; 130; 230; 330) den Abtaststrahlengang zwischen Abtasteinheit (20; 120; 220; 320) und Maßverkörperung (10; 110; 210) weitgehend umgibt und
   - **dass** die Schutzhaube (30; 130; 230; 330) Rückstellmittel umfasst, die bei einem Ausfall der Energieversorgung automatisch einen maximal möglichen Abstand zwischen der Schutzhaube (30; 130; 230; 330) und der Maßverkörperung (10; 110; 210) einstellen.

2. Positionsmesseinrichtung nach Anspruch 1, **dadurch gekennzeichnet, dass** der Abstand zwischen der Schutzhaube (30; 130; 230; 330) und der Maßverkörperung (10; 110; 210)

   - in einem ersten Betriebsmodus auf einen derartigen Abstandswert einstellbar ist, so dass die Schutzhaube (30; 130; 230; 330) den Abtaststrahlengang zwischen Abtasteinheit (20; 120; 220; 320) und Maßverkörperung (10; 110; 210) zumindest in dem Raumbereich abschirmt, in dem dieser empfindlich gegenüber Brechungsindexschwankungen ist und
   - in mindestens einem zweiten Betriebsmodus auf einen größeren Abstandswert als im ersten Betriebsmodus einstellbar ist.

3. Positionsmesseinrichtung nach Anspruch 2, **dadurch gekennzeichnet, dass** in die Schutzhaube (30; 130; 230; 330) ein Luftlager (170) integriert ist, über das im ersten Betriebsmodus ein konstanter Abstandswert zwischen der Schutzhaube (30; 130; 230; 330) und der Maßverkörperung (10; 110; 210) einstellbar ist.

4. Positionsmesseinrichtung nach Anspruch 1 oder 2, **dadurch gekennzeichnet, dass** magnetische oder pneumatische Aktuatormittel vorhanden sind, um die Schutzhaube (30; 130; 230; 330) entlang der Achse definiert zu positionieren.

5. Positionsmesseinrichtung nach Anspruch 4, **dadurch gekennzeichnet, dass** der Abstand zwischen Schutzhaube (30; 130; 230; 330) und Maßverkörperung (10; 110; 210) unabhängig von der Position eines Verfahrtisches konstant gehalten wird, an dem die Abtasteinheit (20; 120; 220; 320) angeordnet ist.

6. Positionsmesseinrichtung nach Anspruch 1, **dadurch gekennzeichnet, dass** die Rückstellmittel als Federelemente (43) ausgebildet sind, über die die Schutzhaube (30; 130; 230; 330) mechanisch vorspannbar ist.

7. Positionsmesseinrichtung nach mindestens einem der vorhergehenden Ansprüche, **dadurch gekennzeichnet, dass** die Außenkontur der Schutzhaube (30; 130; 230; 330) derart gestaltet ist, dass durch die die Schutzhaube (30; 130; 230; 330) umströmende Luft keine Luftverwirbelungen entstehen.

8. Positionsmesseinrichtung nach mindestens einem der vorhergehenden Ansprüche, **dadurch gekennzeichnet, dass** die Außenkontur der Schutzhaube (30; 130; 230; 330) derart gestaltet ist, dass durch die die Schutzhaube (30; 130; 230; 330) umströmende Luft keine Kräfte auf die Maßverkörperung (10; 110; 210) resultieren.

9. Positionsmesseinrichtung nach mindestens einem der vorhergehenden Ansprüche, **dadurch gekennzeichnet, dass** an der Schutzhaube (30; 130; 230; 330) mindestens ein Strömungselement angeordnet ist, welches derart ausgebildet ist, dass sich der Stau- und Saugdruck an der Schutzhaube (30; 130; 230; 330) mit den dynamischen Drücken am Strömungselement bei einer bestimmten Geschwindigkeit des Verfahrtisches aufhebt, an dem die Abtasteinheit (20; 120; 220; 320) angeordnet ist.

10. Positionsmesseinrichtung nach Anspruch 9, **dadurch gekennzeichnet, dass** das Strömungselement als Luftleitblech ausgebildet ist, das seitlich an der Schutzhaube (30; 130; 230; 330) angeordnet ist.

11. Positionsmesseinrichtung nach mindestens einem der vorhergehenden Ansprüche, **dadurch gekennzeichnet, dass** die Schutzhaube (30; 130; 230; 330) um eine auf die Maßverkörperungsebene senkrecht stehende Achse drehbar angeordnet ist.

12. Positionsmesseinrichtung nach mindestens einem der vorhergehenden Ansprüche, **dadurch gekennzeichnet, dass** sich die Schutzhaube (30; 130; 230; 330) entlang der Achse senkrecht zur Maßverkörperungs-Ebene erstreckt und entlang dieser Achse eine Ausdehnung besitzt, die geringfügig kleiner als der Abstand zwischen der Maßverkörperung (10; 110; 210) und der Abtasteinheit (20; 120; 220; 320) ist.

13. Positionsmesseinrichtung nach mindestens einem der vorhergehenden Ansprüche, **dadurch gekennzeichnet, dass** die Schutzhaube (30; 130; 230; 330) zylinderförmig ausgebildet ist, wobei sich die Zylinderachse entlang der Achse senkrecht auf die Maßverkörperungsebene erstreckt.

14. Positionsmesseinrichtung mindestens einem der vorhergehenden Ansprüche, **dadurch gekennzeichnet, dass** die Schutzhaube (30; 130; 230; 330) an der der Maßverkörperung (10; 110; 210) zugewandten Seite eine Öffnung oder ein lichtdurchlässiges Abdeckelement aufweist.

## Claims

1. Optical position-measuring device having a material measure (10; 110; 210) and a scanning unit (20; 120; 220; 320) movable relative thereto along at least one measuring direction, a scanning beam path which serves to generate signals as a function of displacement being formed between the material measure (10; 110; 210) and scanning unit (20; 120; 220; 320),
**characterized**

 - **in that** a protective cap (30; 130; 230; 330) is arranged movably along an axis perpendicular to the plane of the material measure in such a way that in at least one operating mode the protective cap (30; 130; 230; 330) largely surrounds the scanning beam path between the scanning unit (20; 120; 220; 320) and material measure (10; 110; 210), and
 - **in that** the protective cap (30; 130; 230; 330) comprises resetting means which in the event of failure of the energy supply automatically set a maximum possible distance between the protective cap (30; 130; 230; 330) and the material measure (10; 110; 210).

2. Position-measuring device according to Claim 1, **characterized in that** the distance between the protective cap (30; 130; 230; 330) and the material measure (10; 110; 210)

- can be set in a first operating mode to a distance value which is such that the protective cap (30; 130; 230; 330) screens the scanning beam path between the scanning unit (20; 120; 220; 320) and material measure (10; 110; 210) at least in the spatial area in which said path is sensitive to refractive index fluctuations, and
- can be set, at least in a second operating mode, to a greater distance value than in the first operating mode.

3. Position-measuring device according to Claim 2, **characterized in that** integrated in the protective cap (30; 130; 230; 330) is an air bearing (170) via which it is possible in a first operating mode to set a constant distance value between the protective cap (30; 130; 230; 330) and the material measure (10; 110; 210).

4. Position-measuring device according to Claim 1 or 2, **characterized in that** magnetic or pneumatic actuator means are present in order to position the protective cap (30; 130; 230; 330) along the axis in a defined fashion.

5. Position-measuring device according to Claim 4, **characterized in that** the distance between the protective cap (30; 130; 230; 330) and material measure (10; 110; 210) is kept constant independent of the position of the movement stage on which the scanning unit (20; 120; 220; 320) is arranged.

6. Position-measuring device according to Claim 1, **characterized in that** the resetting means are designed as spring elements (43) via which the protective cap (30; 130; 230; 330) can be mechanically prestressed.

7. Position-measuring device according to at least one of the preceding claims, **characterized in that** the cuter contour of the protective cap (30; 130; 230; 330) is configured so that the air flowing around the protective cap (30; 130; 230; 330) does not cause any air vortices.

8. Position-measuring device according to at least one of the preceding claims, **characterized in that** the outer contour of the protective cap (30; 130; 230; 330) is configured so that the air flowing around the protective cap (30; 130; 230; 330) does not result in any forces on the material measure (10; 110; 210).

9. Position-measuring device according to at least one of the preceding claims, **characterized in that** arranged on the protective cap (30; 130; 230; 330) is at least one flow element which is designed in such a way that the dynamic pressure and suction pressure on the protective cap (30; 130; 230; 330) are cancelled out together with the dynamic pressures on the flow element at a particular speed of the movement stage on which the scanning unit (20; 120; 220; 320) is arranged.

10. Position-measuring device according to Claim 9, **characterized in that** the flow element is designed as an air guide which is arranged laterally on the protective cap (30; 130; 230; 330).

11. Position-measuring device according to at least one of the preceding claims, **characterized in that** the protective cap (30; 130; 230; 330) is arranged rotatably about an axis perpendicular to the plane of the material measure.

12. Position-measuring device according to at least one of the preceding claims, **characterized in that** the protective cap (30; 130; 230; 330) extends along the axis perpendicular to the plane of the material measure and has along said axis an extent which is slightly smaller than the distance between the material measure (10; 110; 210) and the scanning unit (20; 120; 220; 320).

13. Position-measuring device according to at least one of the preceding claims, **characterized in that** the protective cap (30; 130; 230; 330) is of cylindrical design, the cylinder axis extending along the axis perpendicular to the plane of the material measure.

14. Position-measuring device according to at least one of the preceding claims, **characterized in that** on the side facing the material measure (10; 110; 210) the protective cap (30; 130; 230; 330) has an opening or a translucent cover element.

**Revendications**

1. Dispositif de mesure de position optique comprenant un étalon (10 ; 110 ; 210) ainsi qu'une unité de palpage (20 ;

120 ; 220 ; 320) qui peut être déplacée par rapport à celui-ci le long d'au moins une direction de mesure, un trajet de rayon de palpage servant à générer des signaux dépendants du déplacement étant formé entre l'étalon (10 ; 110 ; 210) et l'unité de palpage (20 ; 120 ; 220 ; 320),
**caractérisé en ce**

- **qu'**un capot de protection (30 ; 130 ; 230 ; 330) est monté mobile le long d'un axe perpendiculaire au plan de l'étalon de telle sorte que dans au moins un mode de fonctionnement, le capot de protection (30 ; 130 ; 230 ; 330) entoure amplement le trajet de rayon de palpage entre l'unité de palpage (20 ; 120 ; 220 ; 320) et l'étalon (10 ; 110 ; 210) et
- en ce que le capot de protection (30 ; 130 ; 230 ; 330) comprend des moyens de rappel qui, dans le cas d'une panne de l'alimentation en énergie, règlent automatiquement un écart maximum possible entre le capot de protection (30 ; 130 ; 230 ; 330) et l'étalon (10 ; 110 ; 210).

2.  Dispositif de mesure de position selon la revendication 1, **caractérisé en ce que** l'écart entre le capot de protection (30 ; 130 ; 230 ; 330) et l'étalon (10 ; 110 ; 210)

- dans un premier mode de fonctionnement, peut être réglé à une valeur d'écart telle que le capot de protection (30 ; 130 ; 230 ; 330) fait écran au trajet de rayon de palpage entre l'unité de palpage (20 ; 120 ; 220 ; 320) et l'étalon (10 ; 110 ; 210) au moins dans la zone d'espace dans laquelle celui-ci est sensible aux fluctuations de l'indice de réfraction et
- dans au moins un deuxième mode de fonctionnement, peut être réglé à une valeur d'écart supérieure à celle du premier mode de fonctionnement.

3.  Dispositif de mesure de position selon la revendication 2, **caractérisé en ce que** dans le capot de protection (30 ; 130 ; 230 ; 330) est intégré un coussinet d'air (170) par le biais duquel, dans le premier mode de fonctionnement, une valeur d'écart constante peut être réglée entre le capot de protection (30 ; 130 ; 230 ; 330) et l'étalon (10 ; 110 ; 210).

4.  Dispositif de mesure de position selon la revendication 1 ou 2, **caractérisé en ce qu'**il existe des actionneurs magnétiques ou pneumatiques pour positionner le capot de protection (30 ; 130 ; 230 ; 330) de manière définie le long de l'axe.

5.  Dispositif de mesure de position selon la revendication 4, **caractérisé en ce que** l'écart entre le capot de protection (30 ; 130 ; 230 ; 330) et l'étalon (30 ; 110 ; 210) est maintenu constant indépendamment d'un plateau mobile sur lequel est montée l'unité de palpage (20 ; 120 ; 220 ; 320).

6.  Dispositif de mesure de position selon la revendication 1, **caractérisé en ce que** les moyens de rappel sont réalisés sous la forme d'éléments à ressort (43) par le biais desquels le capot de protection (30 ; 130 ; 230 ; 330) peut subir une précontrainte.

7.  Dispositif de mesure de position selon au moins l'une des revendications précédentes, **caractérisé en ce que** le contour extérieur du capot de protection (30 ; 130 ; 230 ; 330) est configuré de telle sorte que l'air qui circule autour du capot de protection (30 ; 130 ; 230 ; 330) ne provoque pas de tourbillons d'air.

8.  Dispositif de mesure de position selon au moins l'une des revendications précédentes, **caractérisé en ce que** le contour extérieur du capot de protection (30 ; 130 ; 230 ; 330) est configuré de telle sorte que l'air qui circule autour du capot de protection (30 ; 130 ; 230 ; 330) ne provoque aucune force sur l'étalon (10 ; 110 ; 210).

9.  Dispositif de mesure de position selon au moins l'une des revendications précédentes, **caractérisé en ce que** sur le capot de protection (30 ; 130 ; 230 ; 330) est monté un élément d'écoulement qui est configuré de telle sorte que la pression dynamique et d'aspiration sur le capot de protection (30 ; 130 ; 230 ; 330) est annulée avec la poussée dynamique sur l'élément d'écoulement à une vitesse donnée du plateau mobile sur lequel est montée l'unité de palpage (20 ; 120 ; 220 ; 320).

10.  Dispositif de mesure de position selon au moins la revendication 9, **caractérisé en ce que** l'élément d'écoulement est réalisé sou la forme d'un déflecteur d'air qui est monté latéralement sur le capot de protection (30 ; 130 ; 230 ; 330).

11.  Dispositif de mesure de position selon au moins l'une des revendications précédentes, **caractérisé en ce que** le capot de protection (30 ; 130 ; 230 ; 330) est monté rotatif autour d'un axe qui est perpendiculaire au plan de l'étalon.

12. Dispositif de mesure de position selon au moins l'une des revendications précédentes, **caractérisé en ce que** le capot de protection (30 ; 130 ; 230 ; 330) s'étend le long de l'axe perpendiculaire au plan de l'étalon et possède le long de cet axe une dimension qui est légèrement inférieure à l'écart entre l'étalon (10 ; 110 ; 210) et l'unité de palpage (20 ; 120 ; 220 ; 320).

13. Dispositif de mesure de position selon au moins l'une des revendications précédentes, **caractérisé en ce que** le capot de protection (30 ; 130 ; 230 ; 330) est configuré de forme cylindrique, l'axe de cylindre s'étendant le long de l'axe perpendiculaire au plan de l'étalon.

14. Dispositif de mesure de position selon au moins l'une des revendications précédentes, **caractérisé en ce que** le capot de protection (30 ; 130 ; 230 ; 330) possède, sur le côté qui fait face à l'étalon (10 ; 110 ; 210), une ouverture ou un élément de recouvrement laissant passer la lumière.

FIG.1

FIG.2

**FIG.3**

**FIG.4**

FIG.5

FIG.6

FIG.7

110

130

101

L

L

120

FIG.8

FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1762828 A2
- EP 2520906 A1
- GB 475323 A